# EUROPÄISCHE PATENTANMELDUNG

(11) **EP 2 546 647 A1**
(43) Veröffentlichungstag der Anmeldung: **16.01.2013**
(21) Anmeldenummer: 12450036.4
(22) Anmeldetag: 13.07.2012
(51) Int. Cl.: G01N 33/32, B07C 5/34, G01J 3/46, G01N 21/25, G07C 3/14, G01N 21/90

(54) **Verfahren und Anlage zum Messen der Farbe von Erzeugnissen**

(30) Priorität: 14.07.2011 AT 10372011
(71) Anmelder: w&p Baustoffe GmbH, 9020 Klagenfurt (AT)
(72) Erfinder: Ringswirth, Bernhard, 9373 Klein St. Paul (AT)
(74) Vertreter: Hehenberger, Reinhard

(57) **Zusammenfassung**

Die Farbe von Erzeugnissen, wie in Gebinde (13) abgefüllten Putzen oder Farben, wird im Zuge der Herstellung der Erzeugnisse geprüft, ohne dass die Erzeugnisse enthaltenden Gebinde (13) aus der Produktionslinie entfernt werden, indem die Farbe des Erzeugnisses berührungslos mit Hilfe eines Spektralfotometers (14) erfasst wird. Die erfasste Farbe des Erzeugnisses wird mit einem vorgegebenen Standard verglichen und Gebinde mit Erzeugnissen, deren Farbe vom Standard mehr als im Ausmaß einer festgelegten Toleranz abweicht, aus der Produktion ausgeschleust und die Farbe des Erzeugnisses gegebenenfalls korrigiert.

## Beschreibung

Die Erfindung betrifft ein Verfahren und eine Anlage, mit der die Farbe von Erzeugnissen erfasst werden kann.

Insbesondere in Betracht gezogen sind im Rahmen der Erfindung Erzeugnisse, die im Bauwesen verwendete Produkte sind, wie beispielsweise Putze (Fassadenputze)und Farben (Innen- und Außenfarben).

Bekannt ist es beim Herstellen von Farben und/oder Putzen, die in Gebinden ausgeliefert werden, im Rahmen der Qualitätskontrolle in einem Labor ein Probekärtchen aufzuziehen und die so erhaltene Farbe mit einem Farbfächer oder einem Muster zu vergleichen. Passen die Farben zusammen, ist also die Farbe der Probe richtig, kann die restliche Produktion der Charge freigegeben und gestartet werden. Werden Farbunterschiede, also Abweichungen von der gewünschten Farbe, festgestellt, wird das Gebinde, dem die Probe entnommen worden ist, in einer Station (Offline-Station) nachgefärbt. Dabei wird die Menge an Farbe, die beim Nachfärben hinzugegeben wird, automatisch auf jedes einzelne Gebinde der nachfolgenden Produktion der Charge übertragen.

Das erste Gebinde, an dem die Farbe geprüft worden ist, wird nach der Kontrolle durch das Labor wieder in den normalen Produktionszyklus eingeschleust. Um Verwechslungen auszuschließen wird mittels eines Strichcodelesers das erste Gebinde der Folgeproduktion erkannt, sodass, soferne versehentlich versucht worden ist, ein falsches Gebinde einzuschleusen, dieses anhand des falschen Strichcodes (Barcode) am Gebinde erkannt und die Linie gestoppt werden kann. Eine Fehlermeldung wird angezeigt und der Irrtum kann korrigiert werden.

Die bekannte Verfahrensweise ist vergleichsweise aufwändig und erfordert das Ausschleusen von wenigstens einem Gebinde (insbesondere dem ersten Gebinde) einer Charge aus dem Produktionszyklus. Dies bedeutet Verzögerungen im Produktionsablauf und gibt zu Fehlern Anlass.

Der Erfindung liegt die Aufgabe zugrunde, ein verbessertes Verfahren und eine vereinfachte Anlage der eingangs genannten Gattung zur Verfügung zu stellen.

Gelöst wird diese Aufgabe erfindungsgemäß mit einem Verfahren, das die Merkmale von Anspruch 1 aufweist.

Die Aufgabe wird auch mit einer Anlage gelöst, welche die Merkmale des unabhängigen, auf die Anlage gerichteten Anspruches aufweist.

Bevorzugte und vorteilhafte Ausgestaltungen des Verfahrens und der Anlage gemäß der Erfindung sind Gegenstand der Unteransprüche.

Je nach Ausführungsform erlaubt es die Erfindung, ein Erfassen und Prüfen der Farbe des Erzeugnisses auszuführen, ohne dass ein Gebinde, in dem das zu prüfende Erzeugnis enthalten ist, aus dem Produktionszyklus ausgeschleust werden muss. Es ist also möglich, das Erfassen und Prüfen der Farbe des Erzeugnisses "online" auszuführen, so dass eine Online-Farberfassung und/oder -messung und/oder -prüfung möglich ist. Farbabweichungen werden so direkt und ohne Unterbrechung während der Produktion erkannt.

Die Erfindung erlaubt es, die Steuerung durch das Netzwerk für die automatische Betriebskontrolle und Kalibrierung vorzunehmen.

Ein Vorteil des erfindungsgemäßen Verfahrens ist in einer Ausführungsform, das Erfassen der Farbe (die Messung) durchzuführen, ohne das Medium (Erzeugnis), dessen Farbe zu prüfen ist (Putz oder Farbe), zu berühren, wobei ohne Farbverfälschung Abstände zwischen Erzeugnis und Farbmessgerät bis zu 0,5 Meter möglich sind.

In einer Ausführungsform erlaubt es die Erfindung auch, das Verfahren in Bereichen mit hoher Luftverschmutzung und in explosiven Bereichen auszuführen.

Da die Farbmessung und Prüfung berührungslos erfolgt, ergeben sich auch keine Probleme mit dem Verschmutzen von Prüfgeräten und Ähnlichem.

In einer Ausführungsform kann vorgesehen sein, dass optische und/oder akustische Warnsignale abgegeben werden, wenn Farbtoleranzen - also Abweichungen von der vorgegebenen Farbe - überschritten worden sind.

Die Erfindung erlaubt es, eine vollständige Dokumentation der Farbqualität der Erzeugnisse zur späteren Prüfung zu erstellen. Die Integrität und Objektivität der Messungen wird durch betriebliche Standards gewährleistet.

Ein Vorteil der Erfindung ist es auch, dass sie die Prüfung jedes Gebindes einer Charge erlaubt, sodass auch unerwünschte "Ausreißer" erfasst und aus dem Produktionszyklus ausgeschleust werden können.

In einer bevorzugten Ausführungsform arbeitet das Erfassen und Prüfen der Farbe des Erzeugnisses mit Hilfe eines Farbmessgerätes beispielsweise nach der folgenden Funktionsweise:
Spektralfotometer zerlegen das Spektrum des sichtbaren Lichts (Wellenlänge 380-750 nm) in eine Anzahl schmaler Bänder oder Messkanäle (in der Regel 20 bis 40 Bänder mit etwa 20 bis 10 nm Breite) und liefern für jeden Kanal einen digitalisierten Lichtstärkewert. Das Spektralfotometer misst also den Reflexionsgrad des Erzeugnisses und errechnet Farbnormwerte X, Y und Z. Der Wert für den Reflexionsgrad R des Erzeugnisses ist dabei durch ständiges Kalibrieren auf Weiß- und Schwarzstandards unabhängig von der im Spektralphotometer benutzten Beleuchtungsquelle. Aus diesen Werten wird für die gemessene Farbe des Erzeugnisses eine Remissionskurve aufgebaut. Diese Kurve stellt einen farblichen "Fingerabdruck" des Erzeugnisses dar.

Zur Messung wird polychromatisches Licht durch ein Prisma oder durch ein schmalbandiges Filter in monochromatisches Licht zerlegt. Ein Fotoelement ermittelt die vom Standard und der Probe des Erzeugnisses reflektierten Lichtmengen und wertet ihr Verhältnis aus. Durch Multiplizieren der Messwerte eines jeden Bandes mit den Werten der Standards kann man die zugehörigen Farbwerte CIE-LAB und CIE XYZ erreichen.

Vorteilhaft ist, dass ein Spektralphotometer durch das Beleuchten der Messfläche über das gesamte Spektrum (von Infrarot bis Ultraviolett) des sichtbaren Lichtes die Remissionswerte erfasst (misst). Dadurch kann der genaue Farbort der Farbe des Erzeugnisses definiert und Farbabweichungen von einem Messpunkt zum nächsten berechnet werden.

Das Spektralfotometer, z.B. ein Farbmessgerät der Bauart Teleflash 130 der Firma X-Rite, kontrolliert beispielsweise das Erzeugnis in jedem Gebinde auf Farbunterschiede innerhalb einer Charge.

Das heißt, das erste Gebinde kann als Vergleichsbasis für die gesamte nachfolgende Produktion einer Charge dienen.

Treten Farbunterschiede auf, die außerhalb einer festgelegten Toleranz liegen, werden die betroffenen Gebinde (automatisch) ausgeschleust.

Weitere Einzelheiten und Merkmale der Erfindung ergeben sich aus der nachstehenden Beschreibung bevorzugter Ausführungsformen des Verfahrens und der Anlage, in der das Verfahren ausgeführt werden kann, unter Bezugnahme auf die angeschlossenen Zeichnungen. Es zeigt:

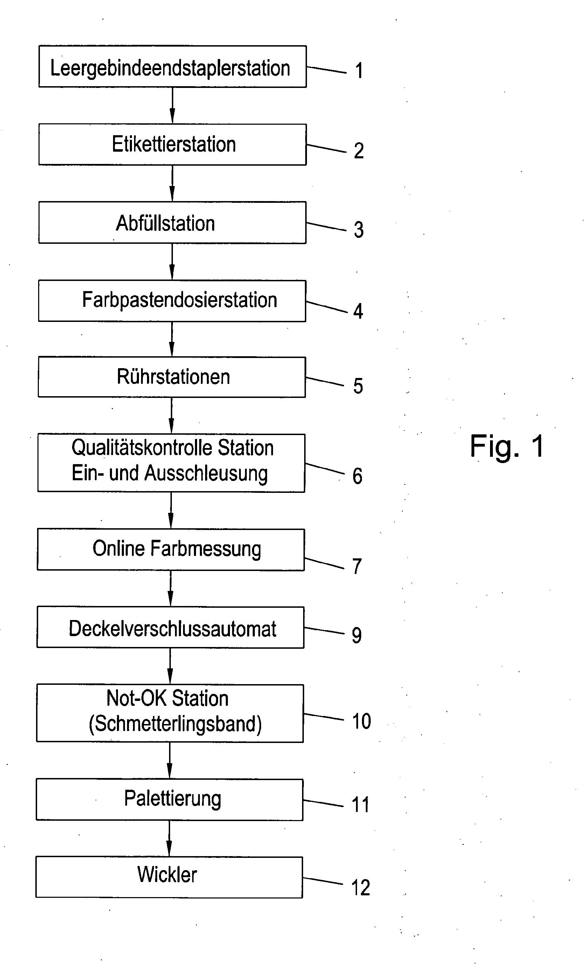

- Fig. 1: in einem Schaubild die wesentlichen Stationen einer Anlage zum Herstellen von Putzen und/oder Farben mit integrierter Online-Farbmessung,

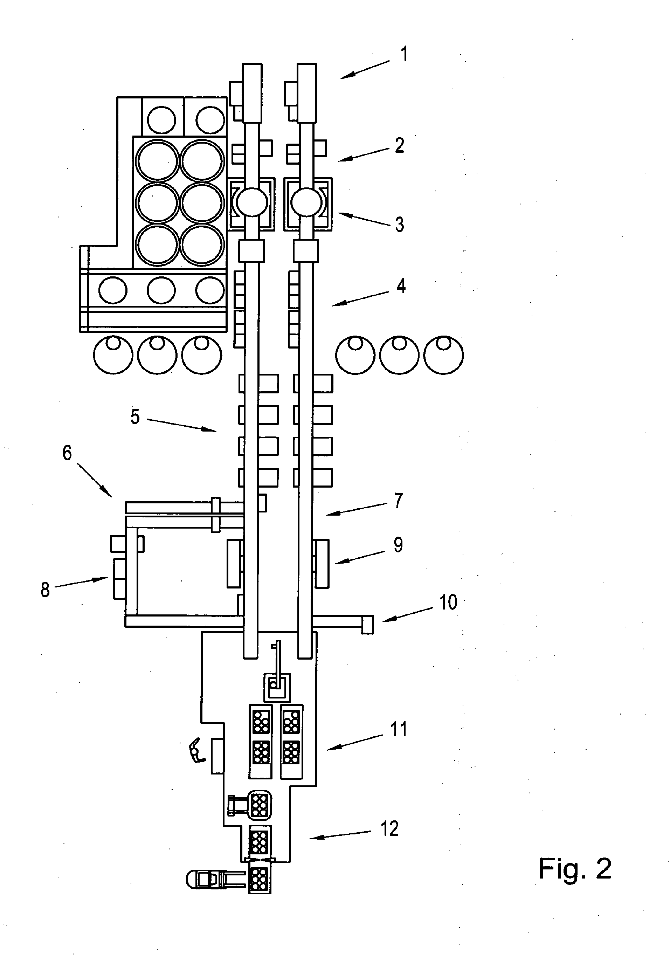

- Fig. 2: eine Draufsicht auf eine beispielsweise Ausführungsform einer Anlage, auf welcher das erfindungsgemäße Verfahren ausgeführt werden kann,
- Fig. 3a und 3b: in einem (geteilten) Schaubild den Produktionsablauf einschließlich der Online-Farbmessung,

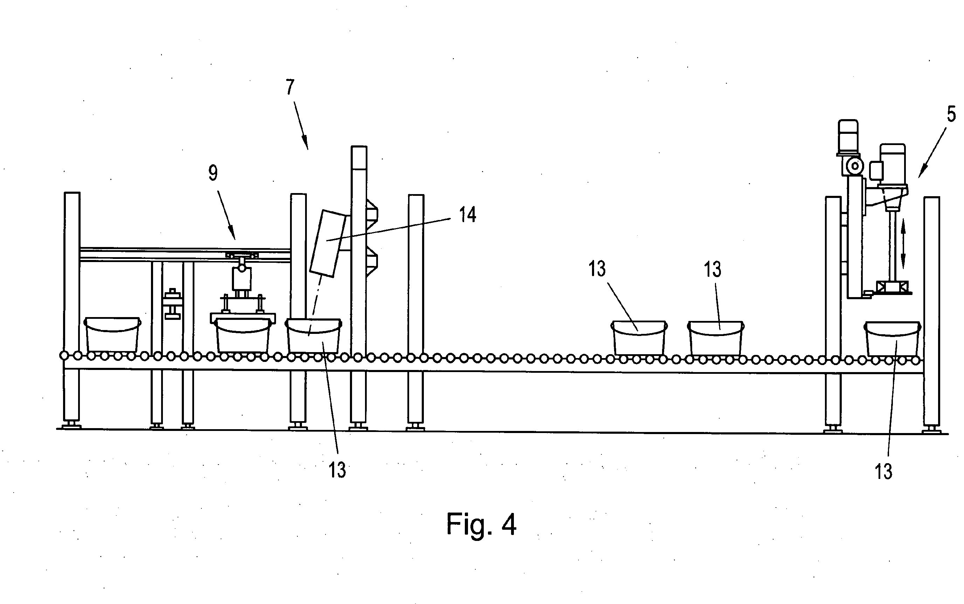

- Fig. 4: in mehr Einzelheiten den Teil der Anlage, in welchem die Online-Farbmessung ausgeführt wird,
- Fig. 5: das Ergebnis einer Online-Farbmessung,

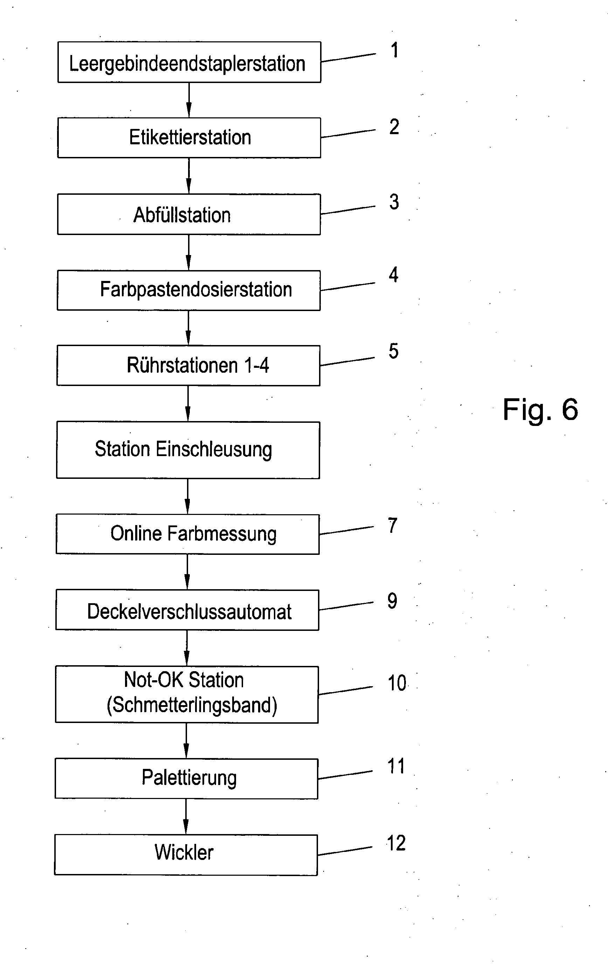

- Fig. 6: in einem Schaubild die wesentlichen Stationen einer abgeänderten Ausführungsform,
- Fig. 7: eine Draufsicht auf eine abgeänderte Ausführungsform einer erfindungsgemäßen Anlage und
- Fig. 8a und Fig.8b: in einem Schaubild den Produktionsablauf einer abgeänderten Ausführungsform.

Eine erfindungsgemäße Anlage zum Abfüllen von Putzen und/oder Farben, die beispielsweise als vollautomatische Abfüllanlage ausgeführt ist, besitzt die nachstehenden, wesentlichen Stationen:
- Leergebindeentstaplerstation 1
- Etikettierstation 2
- Abfüllstation 3
- Farbpastendosierstation 4
- Rührstationen 5
- Qualitätskontrolle-Station mit Ein- und Ausschleusung für Gebinde (fakultativ) 6
- Online Farbmessung 7
- Offline Farbpastendosierstation 8
- Deckelverschlussautomat 9
- Not-OK Station (Schmetterlingsband) 10
- Palettierung 11
- Wickler 12

In der Leergebindeentstaplerstation 1 werden leere Gebinde 13 automatisch aus (zwei) Leergebindemagazinen entstapelt. Wenn zum Beispiel das erste Magazin durch eine Störung ausfällt oder leer ist, werden Gebinde 13 aus dem zweiten Magazin bezogen. Es können auch noch vorgefüllte (sogenannte "Pre-Dosed") Gebinde 13 aufgegeben werden. Hierbei handelt es sich um mit dem Erzeugnis (Putz, Farbe, usw.) vordosierte Gebinde 13 die nur etikettiert oder eingefärbt werden.

In der Etikettierstation 2 werden die Gebinde 13 mit Etiketten versehen, auf denen das Produktionsdatum samt Uhrzeit, die Chargennummer, Farbe, Produktbezeichnung, Struktur, Körnung, Verbrauch, Barcode, EAN-Code und ein Layout wiedergegeben sind.

In der Abfüllstation 3 ("Misura Selecta") wird das Rohprodukt aus Lagertanks in Gebinde 13 gefüllt. Es stehen mehrere, beispielsweise neunzehn, Lagertanks zur Verfügung, aus denen das gewünschte Produkt ausgewählt werden kann.

Die Farbpastendosierstation 4 ("Misura tinta") besteht aus zwei baugleichen Farbpastendosiergeräten. Mit Hilfe von beispielsweise vierzehn Farbpästen können nahezu alle Farben erzeugt werden. Das Befüllen der Farbpastendosiergeräte ("Misura Prima Tinter") mit Farbpaste erfolgt mittels Lagertanks, die beispielsweise auf einem Podest über den Linien aufgebaut sind.

In vier Rührstationen 5 wird das Rohprodukt in den Gebinden 13 mit den Farbpasten vermischt. Die Auslastung der einzelnen Rührstationen 5 erfolgt so, dass es zu möglichst kurzen Wartezeiten und somit möglichst zu keinen Stehzeiten kommt.

Die Qualitätskontrolle in der gegebenenfalls vorgesehenen Qualitätskontrolle-Station 6 wird vom Labor durchgeführt, indem eine Probe des zu prüfenden Erzeugnisses auf ein Probekärtchen aufgezogen wird und mit einem Farbfächer oder einem Muster verglichen wird. Passen die Farben des Erzeugnisses mit den Vorgaben zusammen, so kann die restliche Produktion dieser Charge gestartet werden. Werden aber Farbunterschiede festgestellt, muss der Inhalt dieses Gebindes in einer Offline Station nachgefärbt werden. Die Farbmenge, die beim Nachfärben zugegeben wird, wird automatisch auf jedes einzelne Gebinde 13 in der folgenden Produktion übertragen. Das erste Gebinde 13 einer Produktion von färbigem Erzeugnis wird nach der Kontrolle durch das Labor wieder eingeschleust. Um Verwechslungen auszuschließen, wird mittels eines Barcodereaders das erste Gebinde 13 (der erste Kübel) zur Folgeproduktion erkannt. Wird versehentlich versucht, ein falsches Gebinde 13 einzuschleusen, so wird dies anhand des falschen Barcodes am Gebinde 13 erkannt und die Linie gestoppt. Eine Fehlermeldung wird angezeigt und der Irrtum kann somit korrigiert werden.

Das in der Online-Farbmessung 7 vorgesehene Online - Farbmessgerät 14 für das Bestimmen der Farbe des Erzeugnisses (Putze und Farben) hat die folgenden, grundlegenden Funktionen:
● Online-Farbmessung und -Prüfung, die Farbabweichungen direkt und ohne Unterbrechung während der Produktion erkennt.
● Steuerung durch das Netzwerk für automatische Betriebskontrolle und Kalibrierung
● Messung im Abstand zum Erzeugnis (Medium) bis zu 0,50 m ohne Farbverfälschung.
● Verwendung in Bereichen mit hoher Luftverschmutzung und explosiven Bereichen.
● Berührungsloser Betrieb.
● Optische und akustische Warnungen zeigen an, wenn Farbtoleranzen überschritten werden.
● Vollständige Dokumentation der Farbqualität zur späteren Prüfung. Integrität und Objektivität der Messungen wird insbesondere durch international anerkannte Standards gewährleistet.

### Funktionsweise:

Spektralfotometer zerlegen das Spektrum des sichtbaren Lichts (Wellenlänge 380-750 nm) in eine Anzahl schmaler Bänder oder Messkanäle (in der Regel 20 bis 40 Bänder mit etwa 20 bis 10 nm Breite) und liefern für jeden Kanal einen digitalisierten Lichtstärkewert. Das Spektralfotometer misst also den Reflexionsgrad des Erzeugnisses und errechnet Farbnormwerte X, Y und Z. Der Wert für den Reflexionsgrad R des Erzeugnisses ist dabei durch ständiges Kalibrieren auf Weiß- und Schwarzstandards unabhängig von der im Spektralphotometer benutzten Beleuchtungsquelle. Aus diesen Werten wird für die gemessene Farbe des Erzeugnisses eine Remissionskurve aufgebaut. Diese Kurve stellt einen farblichen "Fingerabdruck" des Erzeugnisses dar.

Zur Messung wird polychromatisches Licht durch wenigstens ein Prisma oder durch wenigstens ein schmalbandiges Filter in monochromatisches Licht zerlegt. Ein Fotoelement ermittelt die vom Standard und der Probe des Erzeugnisses reflektierten Lichtmengen und wertet ihr Verhältnis aus. Durch Multiplizieren der Messwerte eines jeden Bandes mit den Werten der Standards kann man die zugehörigen Farbwerte CIE-LAB und CIE XYZ erreichen.

Vorteilhaft ist, dass ein Spektralphotometer durch das Beleuchten der Messfläche über das gesamte Spektrum (von Infrarot bis Ultraviolett) des sichtbaren Lichtes die Remissionswerte erfasst (misst). Dadurch kann der genaue Farbort der Farbe des Erzeugnisses definiert und Farbabweichungen von einem Messpunkt zum nächsten berechnet werden.

Das Farbmessgerät 14, z.B. Teleflash 130 der Firma X-Rite, kontrolliert jedes Gebinde (Farbe, Struktur, Kratz oder Rille von 0 bis 3mm) auf Farbunterschiede innerhalb einer Charge.

Die bei dem erfindungsgemäßen Verfahren vorgesehene Farbmessung (Online-Farbmessung 7) kann zusätzlich zu der vorbeschriebenen Qualitätskontrolle mit Ein- und Ausschleusen vorgenommen werden. Bevorzugt ist es im Rahmen der Erfindung aber, wenn die Online-Farbmessung 7 ohne die Qualitätskontrolle mit Ein- und Ausschleusen von Gebinden 13, enthaltend die zu prüfenden Erzeugnisse, durchgeführt wird.

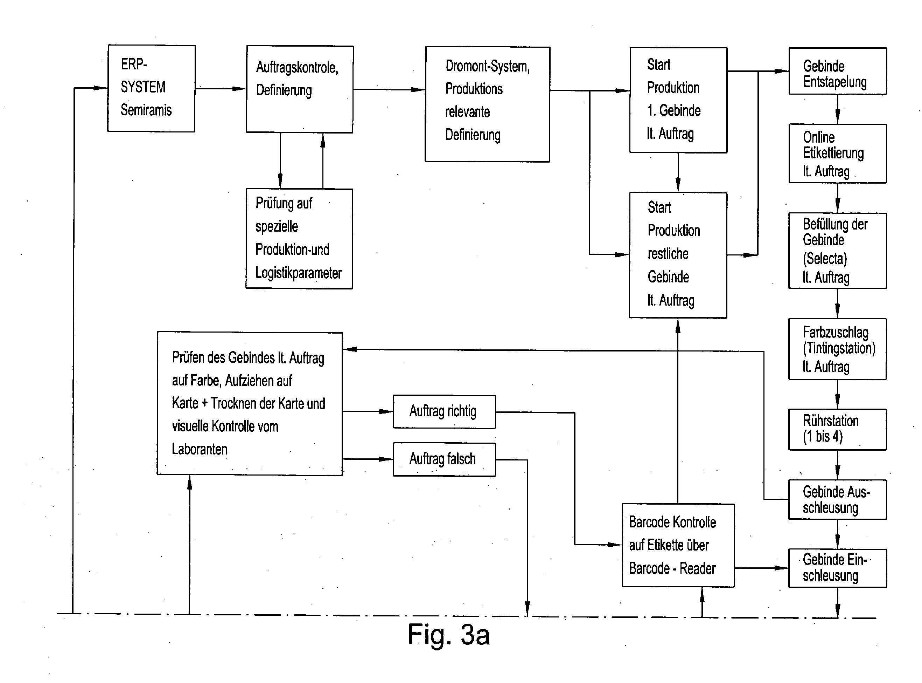

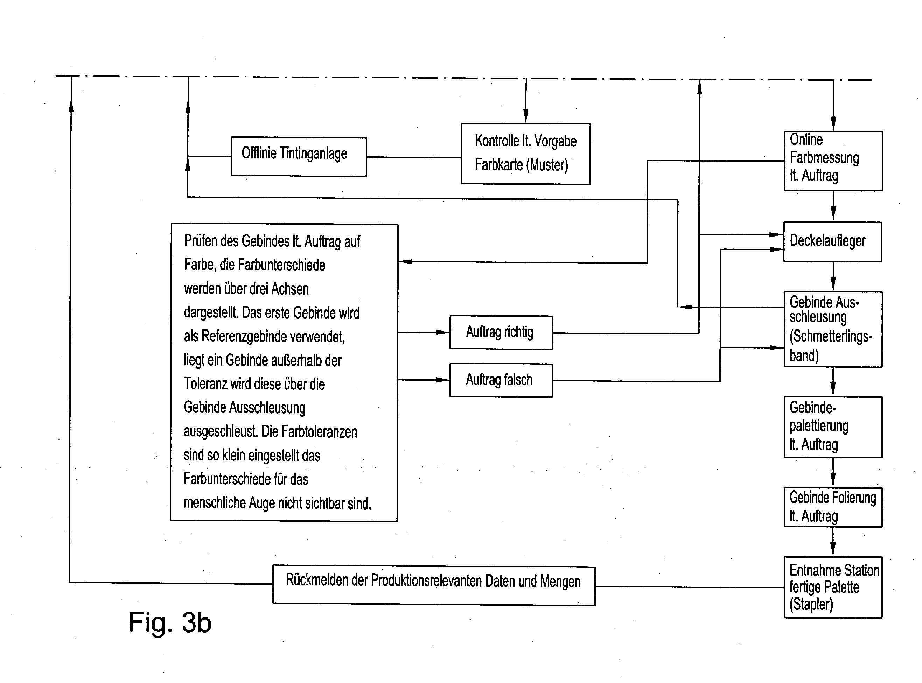

Nachstehend wird unter Bezugnahme auf Fig. 3 und 3a ein Ablauf des Verfahrens im Bereich der Farbprüfung beispielhaft erläutert. Die mit Farbzuschlag (in der Tinting-Station 4) laut Auftrag zu erzielenden Erzeugnisse (Putz oder Farbe) gelangen nach der Rührstation 5 in die Station 6, in der die Qualitätskontrolle (bei der Erfindung nicht zwingend vorgesehen) ausgeführt wird.

In der Station 6 Qualitätskontrolle wird ein Gebinde 13 ausgeschleust und der Inhalt des Gebindes 13 gemäß Auftrag auf Farbe geprüft. Dies erfolgt, wie beschrieben, durch Aufziehen einer Probe des Erzeugnisses, das dem Gebinde 13 entnommen worden ist, auf eine Karte, Trocknen der Karte und visuelle Kontrolle der Farbe durch einen Laboranten. Soferne die Farbe als richtig festgestellt wird, wird eine Strichcode-Kontrolle durchgeführt und über den Strichcode-Leser einerseits die Produktion der restlichen Gebinde dieser Charge gemäß Auftrag in Gang gesetzt. Das Gebinde, an dem die Prüfung auf richtige Farbe durchgeführt worden ist, wird im Bereich Gebindeeinschleusung wieder in den Produktionszyklus rückgeführt.

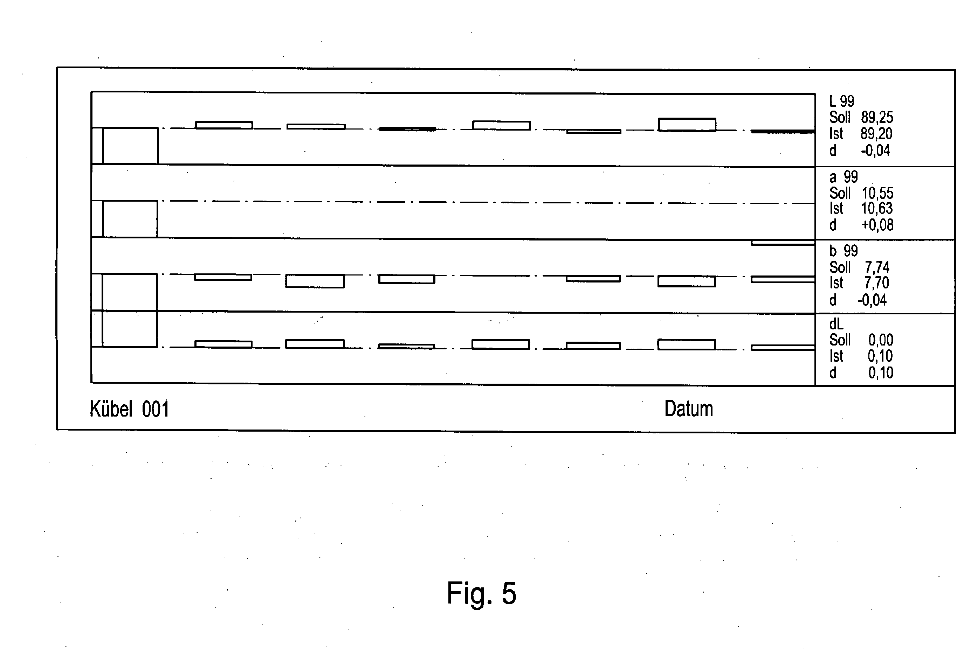

In der Station Online-Farbmessung 7 werden, ohne dass das zu prüfende Erzeugnis enthaltende Gebinde 13 aus dem Produktionszyklus ausgeschleust wird, die Erzeugnisse laut Auftrag auf Farbe geprüft. Dabei werden Farbunterschiede über drei Achsen dargestellt (vgl. Fig. 5). Als Referenzgebinde wird das erste Gebinde 13 einer Charge verwendet, wobei die Richtigkeit der Farbe des Erzeugnisses im ersten Gebinde 13 einer Charge durch Vergleich mit einem vorgegebenen Standard festgestellt wird. Das Erzeugnis im ersten Gebinde 13 dient dann als Referenzgebinde. Liegt die Farbe des Erzeugnisses in einem folgenden Gebinde 13 der Charge außerhalb einer vorgegebenen Toleranz (Abweichung vom ersten, als "Referenzgebinde" dienenden Gebinde), wird das Gebinde 13 aus dem Produktionszyklus ausgeschleust. Dabei erlaubt es die erfindungsgemäße Online-Farbmessung 7 mit dem berührungslosen Spektralfotometer 14 als Messgerät, die Farbtoleranzen so klein einzustellen, dass Farbunterschiede für das menschliche Auge nicht mehr sichtbar sind.

Soferne bei einem nachfolgenden Gebinde 13 einer Charge durch die Online-Farbmessung 7 festgestellt wird, dass die Farbe mit der auftragsgemäßen Farbe übereinstimmt, wird das Gebinde 13 verschlossen und, wie in Fig. 3b gezeigt, weiter verarbeitet und für den Versand fertig gestellt.

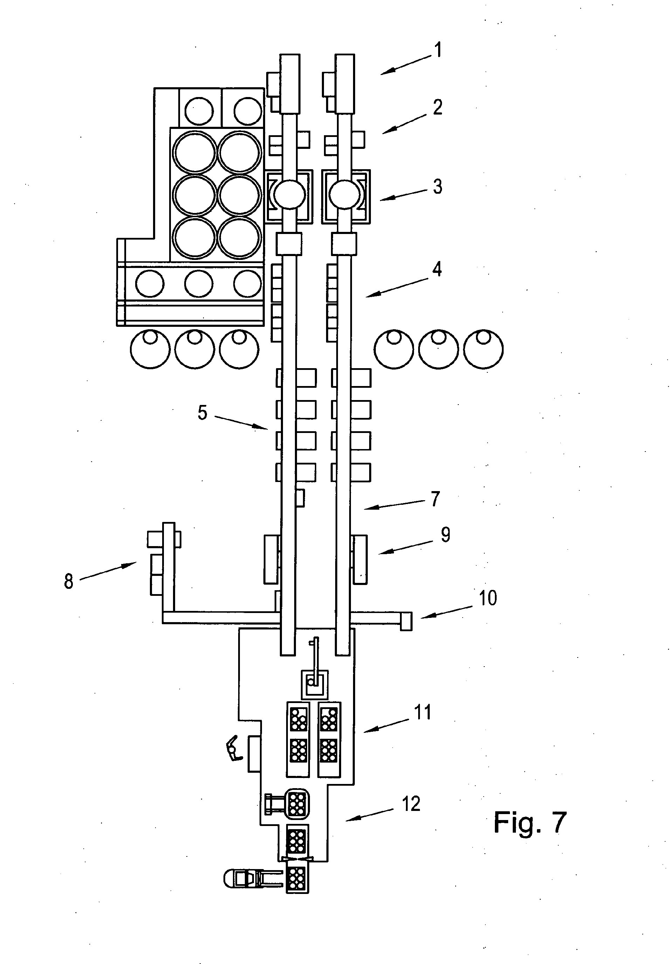

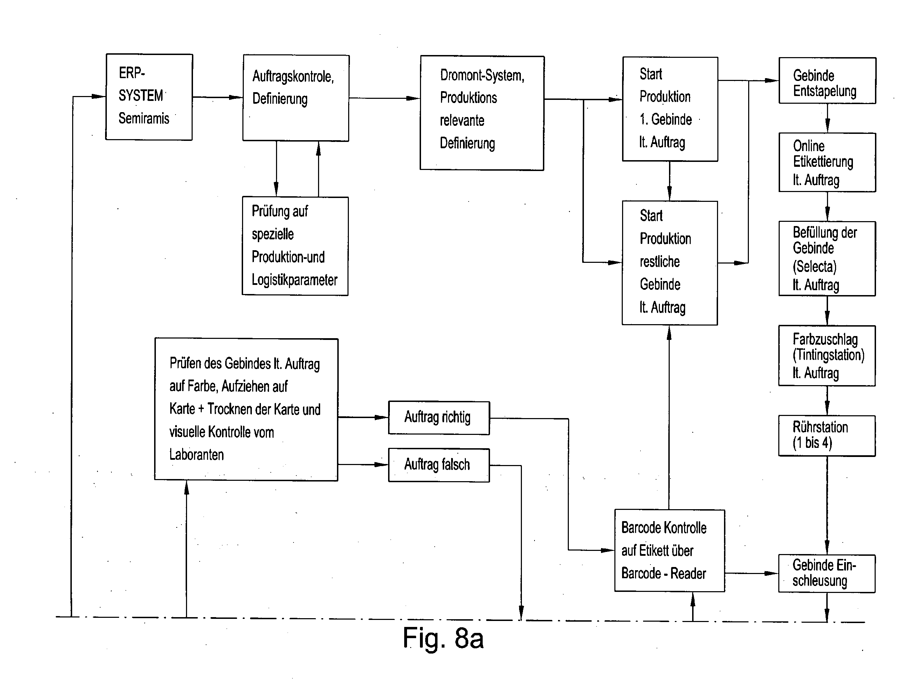

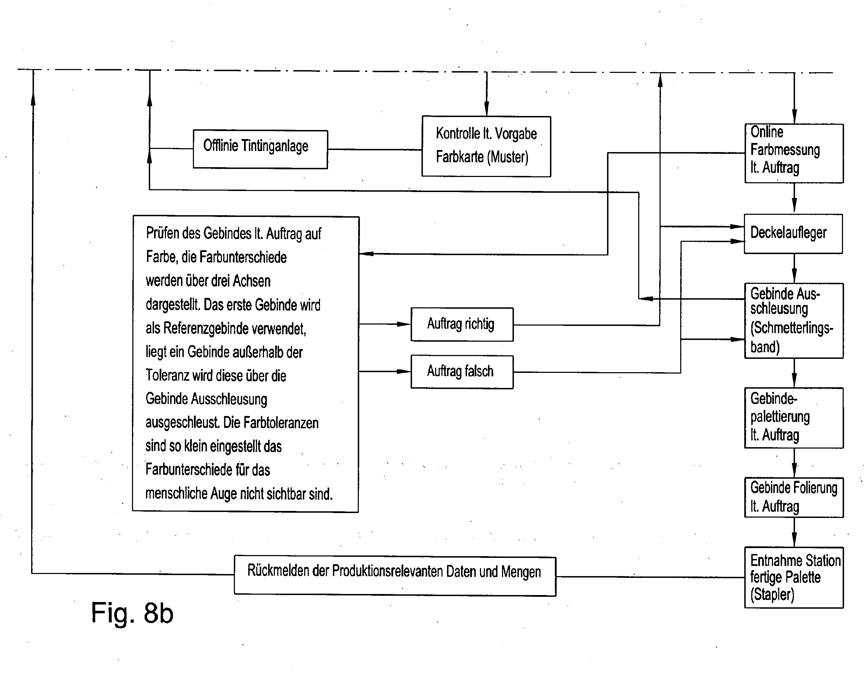

Wenn aber festgestellt wird, dass ein Gebinde 13 ein Erzeugnis enthält, das hinsichtlich der Farbe dem Auftrag nicht entspricht, wird das Gebinde 13 aus dem Produktionszyklus ausgeschleust und, beispielsweise über die "not-okay-Station" 10 (Schmetterlingsband) einer Offline-Tinting-Station 8 zugeführt, um dort nachgefärbt zu werden. Wenn dann die Farbe richtig ist, wird das Gebinde 13, so wie zuvor für die Qualitätskontrolle 6 beschrieben, wieder in den Produktionszyklus eingeschleust. Dies ist in Fig. 7 und 8 gezeigt, in denen eine Anlage und deren Arbeitsabläufe einer Ausführungsform ohne die fakultative Qualitätskontrolle-Station 6 gezeigt sind.

Das Ergebnis einer Online-Farbmessung ist in Fig. 5 dargestellt. Fig. 5 zeigt in Form einer Grafik das Ergebnis einer Messung der Farbe eines färbigen Erzeugnisses. Die Farbunterschiede sind über drei Achsen dargestellt. Die L*Achse zeigt die Unterschiede in der Helligkeit, die a*Achse zeigt die Farbunterschiede von Grün bis Rot und die b*Achse zeigt Unterschiede von Blau bis Grün. Die Achse L99 zeigt die Unterschiede in der Helligkeit. Die Achse a99 zeigt die Farbunterschiede von grün bis rot, die b99-Achse zeigt die Unterschiede von blau bis grün. Die Achse dE zeigt die Summe der gesamten Abweichungen. Die in Fig. 5 wiedergegebene Grafik zeigt das Ergebnis der Farbmessung in einem Gebinde (Kübel: 001). Die Koordinaten des L*a*b*-Farbortes orientieren sich an den physiologischen Eigenschaften der menschlichen Wahrnehmung (Farbwahrnehmung), sie basieren nur mittelbar auf physikalischen Farbvalenzen (Farbmetrik). Der wesentliche Vorteil ist die visuelle Gleichabständigkeit: die geometrisch berechenbaren Abstände zweier Farborte im Lab-System entsprechen gut angenähert visuell wahrgenommenen Farbabständen.

Das erste Gebinde 13, genauer: das Erzeugnis in diesem (dessen Farbe an Hand/unter zu Grunde legen eines Standards geprüft wurde), wird als Referenzgebinde verwendet und ist auf dieser Grafik nicht zu sehen. In der Grafik ist ein Beispiel dargestellt, bei welchem das Erzeugnis im Gebinde 13 "Kübel: 001" außerhalb der vorgegebenen Toleranz liegt, also eine größer als erlaubte Abweichung von der gewünschten Farbe des Erzeugnisses aufweist, und wird daher über die Not-Okay-Station 10 (Schmetterlingsband) aus dem Produktionszyklus ausgeschleust. Bei allen weiteren Gebinden 13 liegt die Abweichung zu der festgestellten Farbe zum Referenzgebinde innerhalb der vorgegebenen Toleranz. Diese Gebinde werden somit als in Ordnung befunden und im Produktionszyklus behalten.

Mit einem Deckelverschlussautomaten 9 werden die Gebinde 13 verschlossen. Mittels einer Zentrierung werden die Deckel passgenau aufgesetzt und durch die Bewegung des Förderbandes über ein sich verengendes Rollensystem luftdicht verschlossen.

Die "Not-OK" Station 10 schleust fehlerhafte Gebinde 13, beispielsweise wegen Toleranzüberschreitung beim Füllen des Rohproduktes oder Dosierungenauigkeiten der Farbpaste, aus. Ein weiterer Grund für ein Ausschleusen kann das Ergebnis der Farbmessung vom ersten Gebinde zu allen weiteren innerhalb einer Charge produzierten Gebinde sein; denn liegt ein Gebinde 13 außerhalb der Toleranz des ersten Gebindes, so wird es automatisch auf die "NOT OK" Station transportiert.

Ein Roboter stapelt in der Palettierung 11 die 25 kg und 30 kg Gebinde 13 auf Paletten drei Lagen hoch, wobei nach der zweiten Lage eine Zwischenpalette eingelegt wird. Diese Zwischenpalette ist für zwei Dinge sinnvoll; kein Kübelbruch bei hohen Temperaturen und Transportstabilisierung. Der Roboter hebt die Paletten aus dem Palettenlager und legt sie jeweils auf der richtigen Seite ab. Die befüllten Gebinde werden jeweils auf der gegenüberliegenden Seite ihrer eigentlichen Linie abgestellt.

Im Wickler 12 wird die fertige Palette samt den befüllten Gebinden foliert, um sie für den Transport zu stabilisieren, oder, wenn sie ins Lager kommt, vor Schmutz und Staub zu schützen.

Zusammenfassend kann ein Ausführungsbeispiel der Erfindung wie folgt beschrieben werden:

Die Farbe von Erzeugnissen, wie in Gebinde 13 abgefüllten Putzen oder Farben, wird im Zuge der Herstellung der Erzeugnisse geprüft, ohne dass die Erzeugnisse enthaltenden Gebinde 13 aus der Produktionslinie entfernt werden, indem die Farbe des Erzeugnisses berührungslos mit Hilfe eines Spektralfotometers 14 erfasst wird. Die erfasste Farbe des Erzeugnisses wird mit einem vorgegebenen Standard verglichen und Gebinde mit Erzeugnissen, deren Farbe vom Standard mehr als im Ausmaß einer festgelegten Toleranz abweicht, aus der Produktion ausgeschleust und die Farbe des Erzeugnisses gegebenenfalls korrigiert.

## Patentansprüche

1. Verfahren zum Erfassen der Farbe von Erzeugnissen, insbesondere von in der Bauindustrie verwendeten Erzeugnissen, wie Putzen oder Farben, **dadurch gekennzeichnet, dass** die Farbe des Erzeugnisses, das in Gebinde abgefüllt ist, erfasst wird, ohne das Gebinde aus dem Produktionsablauf zu entfernen.

2. Verfahren nach Anspruch 1, **dadurch gekennzeichnet, dass** das Erfassen der Farbe ohne Berühren des Erzeugnisses erfolgt.

3. Verfahren nach Anspruch 1 oder 2, **dadurch gekennzeichnet, dass** das Erfassen der Farbe des Erzeugnisses mit Hilfe eines Spektralfotometers erfolgt.

4. Verfahren nach Anspruch 3, **dadurch gekennzeichnet, dass** das Erfassen der Farbe in ausgewählten Bereichen des sichtbaren Lichtes, insbesondere in mehreren Bereichen mit je 10 bis 20 Nanometer Breite, erfolgt.

5. Verfahren nach Anspruch 3 oder 4, **dadurch gekennzeichnet, dass** das Spektralfotometer einen Reflexionsgrad des Erzeugnisses erfasst und Abnormwerte ermittelt, wobei der Wert für den Reflexionsgrad des Erzeugnisses durch Kalibrieren auf Weiß- und Schwarz-Standards ermittelt wird.

6. Verfahren nach einem der Ansprüche 3 bis 5, **dadurch gekennzeichnet, dass** das Erfassen der Farbe durch das Spektralfotometer im Bereich von mehreren Bändern, die durch Zerlegen von polychromatischem Licht mit Hilfe von wenigstens einem Prisma oder Wellenlängenfilter gewonnen werden, erfolgt.

7. Verfahren nach einem der Ansprüche 1 bis 6, **dadurch gekennzeichnet, dass** das Gebinde mit dem Erzeugnis aus dem Produktionsablauf ausgeschleust wird, wenn die ermittelte Farbe einem vorgewählten Farbwert nicht entspricht.

8. Anlage zum Ausführen des Verfahrens nach einem oder mehreren der Ansprüche 1 bis 7, mit wenigstens einer Station (3) zum Abfüllen von Erzeugnissen in Gebinde (13), mit wenigstens einer Station (4) zum Zugeben von Farbstoffen und zum Mischen des in Gebinde (13) abgefüllten Erzeugnisses mit Farbstoffen, insbesondere Farbpaste, gegebenenfalls mit einer Station (6) für Qualitätskontrolle, mit Stationen (9, 11) zum Verschließen und Palettieren der Gebinde (13), **dadurch gekennzeichnet, dass** vor der Station (9) zum Verschließen der Gebinde (13) eine Station (7) zur Farbmessung vorgesehen ist.

9. Anlage nach Anspruch 8, **dadurch gekennzeichnet, dass** die Station (7) zur Farbmessung wenigstens ein Spektralfotometer (14) und eine Lichtquelle umfasst, wobei das Spektralfotometer (14) im Abstand von der Oberfläche des Erzeugnisses im Gebinde (13) angeordnet ist.

10. Anlage nach Anspruch 8 oder 9, **dadurch gekennzeichnet, dass** die Station (7) zur Farbmessung im Anschluss an eine Station (6) zur Qualitätskontrolle mit Ein- und Ausschleusung von nachzufärbenden Erzeugnissen vorgesehen ist.

11. Anlage nach Anspruch 9 oder 10, **dadurch gekennzeichnet, dass** das Spektralfotometer (14) der Farbmessung auf sich durch die Linie bewegende Gebinde (13) gerichtet ist.
